# EUROPEAN PATENT APPLICATION

(11) **EP 4 501 991 A1**
(43) Date of publication of application: **05.02.2025**
(21) Application number: 23780330.9
(22) Date of filing: 27.03.2023
(51) Int. Cl.: C08F 220/18, C08L 33/06

(54) **ACRYLIC RUBBER, ACRYLIC RUBBER-CONTAINING COMPOSITION AND CROSSLINKED RUBBER PRODUCT**

(30) Priority: 31.03.2022 JP 2022059056
(71) Applicant: Osaka Soda Co., Ltd., Osaka-shi Osaka 550-0011 (JP)
(72) Inventor: MOROOKA, Yoshihiro, Osaka-shi, Osaka 550-0011 (JP); ASAI, Hisashi, Osaka-shi, Osaka 550-0011 (JP); KITAGAWA, Motoki, Osaka-shi, Osaka 550-0011 (JP)
(74) Representative: Vossius & Partner Patentanwälte Rechtsanwälte mbB
(86) International application number: PCT/JP2023/012167
(87) International publication number: WO 2023/190320

(57) **Abstract**

The present invention aims to provide an acrylic rubber that is excellent in processability while maintaining good normal-state physical properties. The present invention relates to an acrylic rubber containing a structural unit derived from a polyfunctional monomer having two or more double bonds, the acrylic rubber having a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is 20 to 32.

## Description

### TECHNICAL FIELD

The present invention relates to an acrylic rubber, an acrylic rubber-containing composition, and a crosslinked rubber product.

### BACKGROUND ART

Acrylic rubbers are known to be obtained by copolymerizing a (meth)acrylate through emulsion polymerization or other methods, then introducing the resulting copolymer into an aqueous coagulant solution to obtain a water-containing crumb, and drying the crumb.

Acrylic rubbers are generally known to have excellent heat resistance, oil resistance, and ozone resistance, and their crosslinked products are widely used in automotive components such as seal materials, hose materials, anti-vibration materials, tube materials, belt materials, and boot materials.

Acrylic rubbers need to be processed when they are used in these automotive components. Patent Literature 1 describes that it is possible to improve the processability of an acrylic rubber without reducing its heat resistance.

### CITATION LIST

### PATENT LITERATURE

Patent Literature 1: JP 2009-40922 A

### SUMMARY OF INVENTION

### TECHNICAL PROBLEM

However, the studies of the present inventors have revealed that there is a need for acrylic rubbers to have better processability when they are processed. A task herein is to provide an acrylic rubber that is excellent in processability while maintaining good normal-state physical properties.

### SOLUTION TO PROBLEM

The present inventors made various studies to solve the new task found by them. As a result, they have found that an acrylic rubber that is excellent in processability while maintaining good normal-state physical properties can be produced by allowing the acrylic rubber to have a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is 20 to 32.

Exemplary embodiments of the present invention are as follows.

Embodiment 1. An acrylic rubber, containing a structural unit derived from a polyfunctional monomer having two or more double bonds, the acrylic rubber satisfying the following requirement (i):
(i) a ratio of an area value determined from a stress relaxation curve with a relaxation time of 1 second to 120 seconds obtained by a stress relaxation test in accordance with ASTM D1646:2019 to a Mooney viscosity (ML1+4) measured at 100°C in accordance with a Mooney viscosity test of an uncrosslinked rubber physical test method of JIS K 6300-1:2013 is 20 to 32.

Embodiment 2. The acrylic rubber according to Embodiment 1, further satisfying the following requirement (ii):
(ii) the acrylic rubber has an insoluble content of 60% by mass or lower as measured using a 150 mesh screen after it is immersed in methyl ethyl ketone and left at room temperature for 24 hours.

Embodiment 3. The acrylic rubber according to Embodiment 1 or 2,
wherein the Mooney viscosity (ML1+4) measured at 100°C in accordance with the Mooney viscosity test of the uncrosslinked rubber physical test method of JIS K 6300-1:2013 is 25 to 60.

Embodiment 4. The acrylic rubber according to any one of Embodiments 1 to 3, further containing a structural unit derived from a crosslinking group monomer.

Embodiment 5. An acrylic rubber-containing composition, containing: the acrylic rubber according to any one of Embodiments 1 to 4, and a crosslinking agent.

Embodiment 6. A crosslinked rubber product, produced from the acrylic rubber-containing composition according to Embodiment 5.

### ADVANTAGEOUS EFFECTS OF INVENTION

Since the acrylic rubber of the present invention is excellent in processability while maintaining good normal-state physical properties, it can be suitably used in products that can be produced from acrylic rubbers.

### DESCRIPTION OF EMBODIMENTS

The acrylic rubber of the present invention contains a structural unit derived from a polyfunctional monomer having two or more double bonds and has "a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013" that is 20 to 32. This allows the acrylic rubber to be excellent in processability (extrusion properties, extrudate texture) while maintaining good normal-state physical properties.

The reason for the advantageous effect of the acrylic rubber is believed to be as follows.

When an acrylic rubber has a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is in the range of 20 to 32, the acrylic rubber is believed to achieve both the elasticity required as acrylic rubbers and the rubber viscosity required for processability in a balanced manner. This is believed to be due to the following reason. The area value is a parameter indicative of the balance between elasticity and viscosity. The higher the Mooney viscosity is, the larger the area value tends to be. Thus, by adjusting the quotient of the area value divided by the Mooney viscosity to be within the above range, the acrylic rubber can achieve both the elasticity required as acrylic rubbers and the rubber viscosity required for processability in a balanced manner.

Further, when the acrylic rubber contains a structural unit derived from a polyfunctional monomer having two or more double bonds, the quotient of the area value divided by the Mooney viscosity can be more suitably adjusted to be within the above range, and better processability can also be obtained. This is believed to be because the polyfunctional monomer is introduced while reducing the molecular weight of the polymer to increase the rubber viscosity, so that a high molecular weight polymer is produced, thereby reducing deterioration of the rubber elasticity.

The acrylic rubber of the present invention is preferably a polymer that contains a structural unit derived from a (meth)acrylate as a main component. The "main component" indicates that the acrylic rubber contains at least 50% by mass of the structural unit derived from a (meth)acrylate. Here, the term "(meth)acrylate" means "acrylic acid ester or methacrylic acid ester", and the same applies to similar expressions herein.

Examples of the structural unit derived from a (meth)acrylate include structural units derived from alkyl (meth)acrylates and structural units derived from alkoxyalkyl (meth)acrylates. Preferred among these are structural units derived from C1-C8 alkyl group-containing alkyl (meth)acrylates and structural units derived from C2-C8 alkoxyalkyl group-containing alkoxyalkyl (meth)acrylates. It is more preferred to have a structural unit derived from a C1-C6 alkyl group-containing alkyl (meth)acrylate and/or a structural unit derived from a C2-C6 alkoxyalkyl group-containing alkoxyalkyl (meth)acrylate, particularly preferably a structural unit derived from a C1-C4 alkyl group-containing alkyl (meth)acrylate and/or a structural unit derived from a C2-C4 alkoxyalkyl group-containing alkoxyalkyl (meth)acrylate. A single structural unit derived from a (meth)acrylate may be used, or two or more structural units derived from (meth)acrylates may be used.

Specific examples of alkyl (meth)acrylates include methyl (meth)acrylate, ethyl (meth)acrylate, n-propyl (meth)acrylate, isopropyl (meth)acrylate, n-butyl (meth)acrylate, isobutyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, and other (meth)acrylates. These may be used alone or in combinations of two or more. Of these, ethyl (meth)acrylate or n-butyl (meth)acrylate is preferred.

Specific examples of alkoxyalkyl (meth)acrylates include methoxymethyl (meth)acrylate, methoxyethyl (meth)acrylate, ethoxymethyl (meth)acrylate, 2-ethoxyethyl (meth)acrylate, 2-propoxyethyl (meth)acrylate, 2-butoxyethyl (meth)acrylate, 2-methoxypropyl (meth)acrylate, 2-ethoxypropyl (meth)acrylate, 3-methoxypropyl (meth)acrylate, 3-ethoxypropyl (meth)acrylate, 4-methoxybutyl (meth)acrylate, 4-ethoxybutyl (meth)acrylate, and other (meth)acrylates. These may be used alone or in combinations of two or more. Of these, 2-methoxyethyl (meth)acrylate is preferred.

In the acrylic rubber of the present invention, the lower limit of the amount of structural units derived from (meth)acrylates based on the total structural units of the acrylic rubber is more preferably 50% by mass or more, particularly preferably 60% by mass or more, and may be 70% by mass or more, or 80% by mass or more. The upper limit is preferably 99.5% by mass or less, more preferably 99% by mass or less. The amount may be in the range of 50 to 99.5% by mass, 50 to 99% by mass, 60 to 99.5% by mass, 60 to 99% by mass, 70 to 99.5% by mass, 70 to 99% by mass, 80 to 99.5% by mass, or 80 to 99% by mass.

The acrylic rubber of the present invention preferably contains a structural unit derived from a crosslinking group-containing unsaturated monomer (a structural unit derived from a crosslinking group monomer). Examples of the structural unit derived from a crosslinking group-containing unsaturated monomer include structural units derived from halogen (e.g., chlorine) group-containing unsaturated monomers, structural units derived from carboxy group-containing unsaturated monomers, and structural units derived from epoxy group-containing unsaturated monomers. These may be used alone or in combinations of two or more. Particularly preferred among these are structural units derived from halogen (in particular, chlorine) or carboxy group-containing unsaturated monomers, with structural units derived from carboxy group-containing unsaturated monomers being most preferred.

Examples of halogen group-containing unsaturated monomers include vinyl monochloroacetate and allyl chloroacetate. These may be used alone or in combinations of two or more. Preferred among these is vinyl monochloroacetate.

Examples of carboxy group-containing unsaturated monomers include unsaturated monocarboxylic acids such as (meth)acrylic acid, crotonic acid, 2-pentenoic acid, and cinnamic acid; unsaturated dicarboxylic acids such as fumaric acid, maleic acid, and itaconic acid; carboxylic anhydrides such as maleic anhydride and citraconic anhydride; butenedioic acid monoacyclic alkyl esters such as monomethyl fumarate, monoethyl fumarate, mono-n-butyl fumarate, monomethyl maleate, monoethyl maleate, mono-2-ethylhexyl maleate, and mono-n-butyl maleate; butenedioic acid monocyclic alkyl esters such as monocyclopentyl fumarate, monocyclohexyl fumarate, monocyclopentyl maleate, and monocyclohexyl maleate; and itaconic acid monoesters such as monomethyl itaconate, monoethyl itaconate, mono-n-butyl itaconate, and monocyclohexyl itaconate. These may be used alone or in combinations of two or more. Preferred among these are unsaturated dicarboxylic acid monoesters such as monoethyl fumarate, monopropyl fumarate, monobutyl fumarate, monoethyl itaconate, monopropyl itaconate, and monobutyl itaconate.

Examples of epoxy group-containing unsaturated monomers include glycidyl (meth)acrylate and (meth)allyl glycidyl ether. These may be used alone or in combinations of two or more.

In the acrylic rubber, the amount of structural units derived from crosslinking group-containing unsaturated monomers based on the total structural units of the acrylic rubber is preferably 0.09% by mass or more, more preferably 0.28% by mass or more, particularly preferably 0.47% by mass or more, while it is preferably 10% by mass or less, more preferably 5% by mass or less, particularly preferably 2.5% by mass or less. An amount of structural units derived from crosslinking group-containing unsaturated monomers within the above range is preferred in terms of physical properties such as strength and compression set and processability. The amount may be in the range of 0.09 to 10% by mass, 0.09 to 5% by mass, 0.09 to 2.5% by mass, 0.28 to 10% by mass, 0.28 to 5% by mass, 0.28 to 2.5% by mass, 0.47 to 10% by mass, 0.47 to 5% by mass, or 0.47 to 2.5% by mass.

The acrylic rubber of the present invention preferably contains a structural unit derived from a polyfunctional monomer having two or more double bonds. Such structural units may be used alone or in combinations of two or more. The polyfunctional monomer having two or more double bonds may be any polyfunctional monomer having two or more double bonds and is preferably one having a plurality of carbon-carbon double bonds.

Specific examples thereof include polyfunctional (meth)acrylates having two or more carbon-carbon double bonds, such as 1,6-hexanediol di(meth)acrylate (hexamethylene di(meth)acrylate), 1,2-ethylene glycol di(meth)acrylate, 1,12-dodecanediol di(meth)acrylate, poly(ethylene glycol) di(meth)acrylate, poly(propylene glycol) di(meth)acrylate, neopentyl glycol di(meth)acrylate, pentaerythritol di(meth)acrylate, trimethylolpropane tri(meth)acrylate, pentaerythritol tri(meth)acrylate, ditrimethylolpropane tri(meth)acrylate, pentaerythritol tetra(meth)acrylate, and dipentaerythritol hexa(meth)acrylate; polyvalent vinyl compounds such as diisopropenylbenzene, divinylbenzene, triisopropenylbenzene, and trivinylbenzene; and triazine compounds such as 2,4-bis(trichloromethyl)-6-p-methoxystyrene-5-triazine. Preferred among these are polyfunctional (meth)acrylates having two or more carbon-carbon double bonds and polyvalent vinyl compounds, with polyfunctional (meth)acrylates having two or more carbon-carbon double bonds being more preferred. Preferred among polyfunctional (meth)acrylates having two or more carbon-carbon double bonds are 1,6-hexanediol di(meth)acrylate (hexamethylene di(meth)acrylate), trimethylolpropane tri(meth)acrylate, and 1,2-ethylene glycol di(meth)acrylate, with 1,6-hexanediol di(meth)acrylate (hexamethylene di(meth)acrylate) being more preferred. Preferred among polyvalent vinyl compounds is divinylbenzene.

In the acrylic rubber, the amount of structural units derived from polyfunctional monomers having two or more double bonds based on the total structural units of the acrylic rubber is preferably 0.01% by mass or more, more preferably 0.02% by mass or more, particularly preferably 0.03% by mass or more, while it is preferably 1% by mass or less, more preferably 0.5% by mass or less, particularly preferably 0.2% by mass or less. An amount of structural units derived from polyfunctional monomers having two or more double bonds within the above range is preferred in terms of physical properties such as strength and compression set and processability. The amount may be in the range of 0.01 to 0.2% by mass, 0.01 to 0.5% by mass, 0.01 to 1% by mass, 0.02 to 0.2% by mass, 0.02 to 0.5% by mass, 0.02 to 1% by mass, 0.03 to 0.2% by mass, 0.03 to 0.5% by mass, or 0.03 to 1% by mass.

In the acrylic rubber of the present invention, the combined amount of structural units derived from (meth)acrylates, structural units derived from polyfunctional monomers having two or more double bonds, and structural units derived from crosslinking group-containing unsaturated monomers based on the total structural units of the acrylic rubber is preferably 55% by mass or more, more preferably 65% by mass or more, still more preferably 75% by mass or more, further preferably 85% by mass or more, particularly preferably 95% by mass or more, and may be 100% by mass.

The acrylic rubber of the present invention may further contain a copolymerizable monomer other than the above-described monomers as a structural unit of the acrylic rubber without departing from the gist of the present invention. Examples of such other monomers include ethylenically unsaturated nitrile monomers, (meth)acrylamide monomers, aromatic vinyl monomers, conjugated diene monomers, non-conjugated diene monomers, and other olefin monomers. These may be used alone or in combinations of two or more. The amount of structural units derived from these monomers may be 0 to 15% by mass or 0 to 5% by mass.

Examples of ethylenically unsaturated nitrile monomers include acrylonitrile, methacrylonitrile, α-methoxyacrylonitrile, and vinylidene cyanide. These may be used alone or in combinations of two or more.

Examples of (meth)acrylamide monomers include acrylamide, methacrylamide, diacetone acrylamide, diacetone methacrylamide, N-butoxymethylacrylamide, N-butoxymethylmethacrylamide, N-butoxyethylacrylamide, N-butoxyethylmethacrylamide, N-methoxymethylacrylamide, N-methoxymethylmethacrylamide, N-propyoxymethylacrylamide, N-propyoxymethylmethacrylamide, N-methylacrylamide, N-methylmethacrylamide, N,N-dimethylacrylamide, N,N-dimethylmethacrylamide, N,N-diethylacrylamide, N,N-diethylmethacrylamide, N-methylolacrylamide, N-methylolmethacrylamide, ethacrylamide, crotonamide, cinnamic acid amide, maleic diamide, itaconic diamide, methyl maleamide, methyl itaconamide, maleimide, and itaconimide. These may be used alone or in combinations of two or more.

Examples of aromatic vinyl monomers include styrene, α-methylstyrene, o-methylstyrene, p-methylstyrene, o-ethylstyrene, p-ethylstyrene, α-fluorostyrene, p-trifluoromethylstyrene, p-methoxystyrene, p-aminostyrene, p-dimethylaminostyrene, p-acetoxystyrene, styrenesulfonic acid and salts thereof, α-vinylnaphthalene, 1-vinylnaphthalene-4-sulfonic acid and salts thereof, 2-vinylfluorene, 2-vinylpyridine, 4-vinylpyridine, divinylbenzene, diisopropenylbenzene, and vinylbenzyl chloride. These may be used alone or in combinations of two or more.

Examples of conjugated diene monomers include 1,3-butadiene, 2-methyl-1,3-butadiene, 2-chloro-1,3-butadiene, 1,2-dichloro-1,3-butadiene, 2,3-dichloro-1,3-butadiene, 2,3-dimethyl-1,3-butadiene, 2-neopentyl-1,3-butadiene, 2-bromo-1,3-butadiene, 2-cyano-1,3-butadiene, 1,3-pentadiene, 1,3-hexadiene, chloroprene, and piperylene. These may be used alone or in combinations of two or more.

Examples of non-conjugated diene monomers include 1,4-pentadiene, 1,4-hexadiene, ethylidene norbornene, norbornadiene, and dicyclopentadiene. These may be used alone or in combinations of two or more.

Examples of other olefin monomers include esters such as dicyclopentadienyl acrylate, dicyclopentadienyl methacrylate, dicyclopentadienylethyl acrylate, and dicyclopentadienylethyl methacrylate; and ethylene, propylene, vinyl chloride, vinylidene chloride, 1,2-dichloroethylene, vinyl acetate, vinyl fluoride, vinylidene fluoride, 1,2-difluoroethylene, vinyl bromide, vinylidene bromide, 1,2-dibromoethylene, ethyl vinyl ether, and butyl vinyl ether. These may be used alone or in combinations of two or more.

The amounts of the structural units in the acrylic rubber of the present invention can be determined from the nuclear magnetic resonance spectrum of the obtained polymer.

The acrylic rubber of the present invention preferably has a Mooney viscosity (ML1+4) of 25 to 60, more preferably 28 to 55, particularly preferably 30 to 50 as measured at 100°C in accordance with the Mooney viscosity test of the uncrosslinked rubber physical test method of JIS K 6300-1:2013. The molecular weight range of the acrylic rubber used in the present invention preferably satisfies the above-described Mooney viscosity.

The area value of the acrylic rubber of the present invention determined by a Mooney stress relaxation test can be measured by the following method. The area value determined by a Mooney stress relaxation test refers to the area value determined from a stress relaxation curve obtained by a stress relaxation test in accordance with ASTM D1646:2019, with a relaxation time of 1 second to 120 seconds calculated in accordance with ASTM D1646:2019.

Although the area value of the acrylic rubber of the present invention determined by a Mooney stress relaxation test is not limited, the area value is preferably 700 to 1400, more preferably 750 to 1200.

The acrylic rubber of the present invention has a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is 20 to 32, preferably 21 to 30, more preferably 22 to 29.

The acrylic rubber of the present invention preferably has an insoluble content of 60% by mass or lower as measured using a 150 mesh screen after it is immersed in methyl ethyl ketone and left at room temperature for 24 hours. The insoluble content is more preferably 55% by mass or lower, still more preferably 50% by mass or lower, and may be 30% by mass or lower, 20% by mass or lower, 10% by mass or lower, or 5% by mass or lower. This allows the acrylic rubber to have better processability. Herein, the term "room temperature" refers to 25°C.

The insoluble content (% by mass) of the acrylic rubber can be determined by the following method. About 0.2 g of the acrylic rubber is accurately weighed out and placed in a basket made of a 150 mesh screen. Then, the acrylic rubber is immersed in 100 mL of methyl ethyl ketone and left at room temperature for 24 hours. Thereafter, the basket is taken out and dried. The solids remaining in the basket after the drying is weighed. The insoluble content is calculated using the following equation: Insoluble content (% by mass) = 100 × (1 - (Amount of acrylic rubber sample - Amount of solids after drying/Amount of acrylic rubber sample)).

### <Acrylic rubber>

The acrylic rubber used in the present invention can be obtained by polymerizing various monomers. The monomers used may all be commercial products and are not limited.

It should be noted that the acrylic rubber of the present invention is characterized by having a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is 20 to 32. The acrylic rubber of the present invention may be produced by any method. In an exemplary production method, both the area value determined from a stress relaxation curve and the Mooney viscosity can be adjusted by subjecting a (meth)acrylate and a crosslinking group-containing unsaturated monomer to a polymerization reaction to at least a certain degree and then (continuously) adding a polyfunctional monomer having two or more double bonds while continuing the polymerization reaction.

A comparison between acrylic rubbers 1 and 2 in the Examples shows that as the amount of structural units derived from polyfunctional monomers having two or more double bonds increases, the insoluble content, the Mooney viscosity, and the area value determined from a stress relaxation curve increase, but the rate of increase of the Mooney viscosity is similar to the rate of increase of the area value determined from a stress relaxation curve, and therefore the ratio of the area value determined from a stress relaxation curve to the Mooney viscosity is almost constant (increases only a little).

A comparison between acrylic rubbers 1 and 3 in the Examples shows that as the amount of chain transfer agents decreases, the insoluble content and the ratio of the area value determined from a stress relaxation curve to the Mooney viscosity increase.

A comparison between acrylic rubbers 2 and 6 in the Examples shows that the ratio of the area value determined from a stress relaxation curve to the Mooney viscosity is increased by subjecting a (meth)acrylate and a crosslinking group-containing unsaturated monomer to a polymerization reaction to at least a certain degree and then

(continuously) adding a polyfunctional monomer having two or more double bonds while continuing the polymerization reaction.

Based on these behaviors and other factors, a person skilled in the art can freely adjust the ratio of the area value determined from a stress relaxation curve to the Mooney viscosity and the insoluble content.

The mode of the polymerization reaction may be emulsion polymerization, suspension polymerization, bulk polymerization, or solution polymerization. In view of easiness in controlling the polymerization reaction and other factors, emulsion polymerization under normal pressure, which is generally used as a conventionally known acrylic rubber production process, is preferred.

Polymerization via emulsion polymerization may be performed by a usual method. Conventional and common polymerization initiators, emulsifiers, chain transfer agents, polymerization terminators, and other agents may be used.

Any emulsifier may be used in the present invention, including nonionic and anionic emulsifiers generally used in emulsion polymerization. Examples of nonionic emulsifiers include polyoxyethylene alkyl ethers, polyoxyethylene alcohol ethers, polyoxyethylene alkyl phenyl ethers, polyoxyethylene polycyclic phenyl ethers, polyoxyalkylene alkyl ethers, sorbitan fatty acid esters, polyoxyethylene fatty acid esters, and polyoxyethylene sorbitan fatty acid esters. Examples of anionic emulsifiers include alkylbenzene sulfonic acid salts, alkyl sulfate salts, polyoxyethylene alkyl ether sulfate salts, polyoxyalkylene alkyl ether phosphates and salts thereof, and fatty acid salts. One or two or more of these emulsifiers may be used. Typical examples of anionic emulsifiers include sodium dodecyl sulfate, sodium dodecylbenzene sulfonate, and triethanolamine dodecyl sulfate.

The amount of emulsifiers used in the present invention may be an amount generally used in emulsion polymerization. Specifically, the amount per 100 parts by mass of the monomers constituting the acrylic rubber is in the range of 0.01 parts by mass to 10 parts by mass, preferably 0.03 parts by mass to 7 parts by mass, still more preferably 0.05 parts by mass to 5 parts by mass. When a reactive surfactant is used as a monomer component, the addition of an emulsifier is not always necessary.

Any polymerization initiator may be used in the present invention, including polymerization initiators generally used in emulsion polymerization. Specific examples thereof include inorganic polymerization initiators typified by persulfates such as potassium persulfate, sodium persulfate, and ammonium persulfate; organic peroxide polymerization initiators such as 2,2-di(4,4-di-(t-butylperoxy)cyclohexyl)propane, 1-di-(t-hexylperoxy)cyclohexane, 1,1-di-(t-butylperoxy)cyclohexane, n-butyl 4,4-di-(t-butylperoxy)valerate, 2,2-di(t-butylperoxy)butane, t-butyl hydroperoxide, cumene hydroperoxide, diisopropylbenzene hydroperoxide, p-menthane hydroperoxide, 1,1,3,3-tetramethylbutyl hydroperoxide, t-butyl cumyl peroxide, di-t-butyl peroxide, di-t-hexyl peroxide, di(2-t-butylperoxyisopropyl)benzene, dicumyl peroxide, diisobutyryl peroxide, di(3,5,5-trimethylhexanoyl)peroxide, dilauroyl peroxide, disuccinic acid peroxide, dibenzoyl peroxide, di(3-methylbenzoyl)peroxide, benzoyl(3-methylbenzoyl)peroxide, diisopropyl peroxydicarbonate, di-n-propyl peroxydicarbonate, di(4-t-butylcyclohexyl)peroxydicarbonate, di(2-ethylhexyl)peroxydicarbonate, di-sec-butyl peroxydicarbonate, cumyl peroxyneodecanoate, 1,1,3,3-tetramethylbutyl peroxyneodecanoate, t-hexyl peroxyneodecanoate, t-butyl peroxyneodecanoate, t-hexyl peroxypivalate, t-butyl peroxypivalate, 2,5-dimethyl-2,5-di(2-ethylhexanoylperoxy)hexane, 1,1,3,3-tetramethylbutyl peroxy-2-ethylhexanate, t-hexyl peroxy-2-ethylhexanate, t-butyl peroxy-2-ethylhexanate, t-butyl peroxylaurate, t-butyl peroxy-3,5,5-trimethylhexanate, t-hexyl peroxy isopropyl monocarbonate, t-butyl peroxy isopropyl monocarbonate, t-butyl peroxy-2-ethylhexyl monocarbonate, 2,5-dimethyl-2,5-di(benzoylperoxy)hexane, t-butyl peroxyacetate, t-hexyl peroxybenzoate, t-butyl peroxybenzoate, and 2,5-dimethyl-2,5-di(t-butylperoxy)hexane; hydroperoxides; and azo initiators such as azobisisobutyronitrile, 4-4'-azobis(4-cyanovaleric acid), 2-2'-azobis[2-(2-imidazolin-2-yl)propane, 2-2'-azobis(propane-2-carboamidine), 2-2'-azobis[N-(2-carboxyethyl)-2-methylpropaneamide, 2-2'-azobis{2-[1-(2-hydroxyethyl)-2-imidazolin-2-yl]propane}, 2-2'-azobis(1-imino-1-pyrrolidino-2-methylpropane), and 2-2'-azobis{2-methyl-N-[1,1-bis(hydroxymethyl)-2-hydroxyethyl]propaneamide}. These polymerization initiators may be used alone or in combinations of two or more.

The amount of polymerization initiators used in the present invention may be an amount generally used in emulsion polymerization. Specifically, the amount per 100 parts by mass of the monomers constituting the acrylic rubber is in the range of 0.01 parts by mass to 5 parts by mass.

Moreover, organic peroxides or inorganic peroxides as polymerization initiators may be combined with reductants to be used as redox polymerization initiators. Nonlimiting examples of reductants that may be used in combination include compounds containing reduced metal ions, such as ferrous sulfate and cuprous naphthenate; sodium formaldehyde sulfoxylate, methane compounds such as sodium methanesulfonate, amine compounds such as dimethylaniline, ascorbic acid and salts thereof, and reducing inorganic salts such as alkali metal salts of sulfurous acid or thiosulfuric acid. These reductants may be used alone or in combinations of two or more. The amount of reductants per 100 parts by mass of the monomers constituting the acrylic rubber is preferably 0.0003 to 10.0 parts by mass.

A chain transfer agent may be used as needed. Specific examples of chain transfer agents include alkyl mercaptans such as n-hexyl mercaptan, n-octyl mercaptan, t-octyl mercaptan, n-dodecyl mercaptan, t-dodecyl mercaptan, and n-stearyl mercaptan, 2,4-diphenyl-4-methyl-1-pentene, 2,4-diphenyl-4-methyl-2-pentene, xanthogen compounds such as dimethyl xanthogen disulfide and diisopropyl xanthogen disulfide, terpinolene, thiuram compounds such as tetramethylthiuram disulfide, tetraethylthiuram disulfide, and tetramethylthiuram monosulfide, phenolic compounds such as 2,6-di-t-butyl-4-methylphenol and styrenated phenol, allyl compounds such as allyl alcohol, halogenated hydrocarbon compounds such as dichloromethane, dibromomethane, and carbon tetrabromide, vinyl ethers such as α-benzyloxystyrene, α-benzyloxyacrylonitrile, and α-benzyloxyacrylamide, triphenylethane, pentaphenylethane, acrolein, methacrolein, thioglycolic acid, thiomalic acid, and 2-ethylhexyl thioglycolate. One or two or more of these chain transfer agents may be used. Although the amount of these chain transfer agents is not limited, the amount per 100 parts by mass of the monomers constituting the acrylic rubber is usually 0 parts by mass to 5 parts by mass and may be 0.01 parts by mass to 3 parts by mass.

Examples of polymerization terminators include hydroxylamine, hydroxylamine sulfate, diethylhydroxyamine, hydroxyamine sulfonic acid and alkali metal salts thereof, sodium dimethyldithiocarbamate, and quinone compounds such as hydroquinone. These may be used alone or in combinations of two or more. Although the amount of polymerization terminators used is not limited, the amount per 100 parts by mass of the monomers constituting the acrylic rubber is usually 0 parts by mass to 2 parts by mass.

Furthermore, the pH of the polymer produced as described above may be adjusted using a base as a pH adjuster, if needed. Specific examples of the base include sodium hydroxide, potassium hydroxide, calcium hydroxide, sodium hydrogen carbonate, ammonia, inorganic ammonium compounds, and organic amine compounds. The pH is in the range of 1 to 11, preferably in the range of 1.5 to 10.5, more preferably in the range of 2 to 10.

In addition to the above components, polymerization auxiliary materials such as particle size modifiers, chelating agents, and oxygen scavengers may be used as needed.

Emulsion polymerization may be performed batchwise, semi-batchwise, or continuously. The polymerization time and the polymerization temperature are not limited and can be selected appropriately according to the type of polymerization initiator used or other factors. Generally, the polymerization temperature is 10°C to 100°C, and the polymerization time is 0.5 to 100 hours.

The polymer produced as described above may be collected by any method, including common methods. Such an exemplary method includes continuously or batchwise supplying the polymerization liquid obtained, for example, by emulsion polymerization, to a coagulant-containing aqueous solution. This operation provides a water-containing crumb. In this operation, the temperature of the coagulant-containing aqueous solution may be affected by the type and amount of the monomers used or the coagulation conditions, including the shear force generated by stirring or other means, and therefore cannot be uniformly specified. However, the temperature is generally 50°C to 100°C, preferably in the range of 60°C to 100°C.

The coagulant used in the coagulation step is not limited and is preferably an inorganic metal salt. Specific examples thereof include sodium sulfate, magnesium sulfate, aluminum sulfate, sodium chloride, and calcium chloride.

Further, an antioxidant may be added during the coagulation step described above. Specific examples of the antioxidant include phenolic antioxidants, amine antioxidants, phosphanol antioxidants, and hindered amine antioxidants. These may be used alone or in combinations of two or more.

Furthermore, the pH of the water-containing crumb obtained as described above may be adjusted using a base as a pH adjuster, if needed. Specific examples of the base include sodium hydroxide, potassium hydroxide, calcium hydroxide, sodium hydrogen carbonate, ammonia, inorganic ammonium compounds, and organic amine compounds. The pH is in the range of 1 to 11, preferably in the range of 2 to 10, more preferably in the range of 4 to 8.

The water-containing crumb obtained as described above is preferably subjected to washing with water to remove the coagulant. If washing with water is not performed at all or is insufficient, ionic residues derived from the coagulant may precipitate during the forming step.

The water-containing crumb after the washing with water may be dehydrated and dried to obtain an acrylic rubber. Although the drying may be performed by any method, it is generally performed using a flash dryer, a fluid dryer, or other dryer. Moreover, the drying step may be preceded by a dehydration step using a centrifuge or other device.

### <Acrylic rubber-containing composition>

The acrylic rubber-containing composition of the present invention can be provided by containing an acrylic rubber as described above and at least a crosslinking agent. These may be used alone or in combinations of two or more.

The amount of acrylic rubbers as described above based on 100% by mass of the rubber components in the acrylic rubber-containing composition of the present invention is preferably 80% by mass or more, more preferably 90% by mass or more, still more preferably 95% by mass or more, and may be 100% by mass.

Examples of the crosslinking agent include conventionally known crosslinking agents usually used in rubber crosslinking, such as polyvalent amine compounds, polyvalent epoxy compounds, polyvalent isocyanate compounds, aziridine compounds, sulfur compounds, basic metal oxides, and organic metal halides. Polyvalent amine compounds are suitable among these.

Examples of polyvalent amine compounds include aliphatic polyvalent amine compounds such as hexamethylenediamine, hexamethylenediamine carbamate, and N,N'-dicinnamylidene-1,6-hexanediamine; and aromatic polyvalent amine compounds such as 4,4'-methylenedianiline, m-phenylenediamine, 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylenediamine, p-xylylenediamine, 1,3,5-benzenetriamine, 1,3,5-benzenetriaminomethyl, and isophthalic acid dihydrazide. Aliphatic polyvalent amine compounds are preferred among these.

Examples of polyvalent epoxy compounds include phenol novolac epoxy compounds, cresol novolac epoxy compounds, cresol epoxy compounds, bisphenol A epoxy compounds, bisphenol F epoxy compounds, brominated bisphenol A epoxy compounds, brominated bisphenol F epoxy compounds, hydrogenated bisphenol A epoxy compounds, and other glycidyl ether epoxy compounds, alicyclic epoxy compounds, glycidyl ester epoxy compounds, glycidyl amine epoxy compounds, isocyanurate epoxy compounds, and other polyvalent epoxy compounds.

Examples of polyvalent isocyanate compounds include 2,4-tolylene diisocyanate, 2,6-tolylene diisocyanate, 4,4'-diphenylmethane diisocyanate, hexamethylene diisocyanate, p-phenylene diisocyanate, m-phenylene diisocyanate, 1,5-naphthylene diisocyanate, 1,3,6-hexamethylene triisocyanate, 1,6,11-undecane triisocyanate, and bicycloheptane triisocyanate.

Examples of aziridine compounds include tris-2,4,6-(1-aziridinyl)-1,3,5-triazine, tris[1-(2-methyl)aziridinyl]phosphinoxide, and hexa[1-(2-methyl)aziridinyl]triphosphatriazine.

Examples of sulfur compounds include sulfur, 4,4'-dithiomorpholine, tetramethylthiuram disulfide, and tetraethylthiuram disulfide.

Examples of basic metal oxides include zinc oxide, lead oxide, calcium oxide, and magnesium oxide.

Examples of organic metal halides include dicyclopentadienyl metal dihalides, and examples of such metals include titanium and zirconium.

These crosslinking agents may be used alone or in combinations of two or more. The amount of each crosslinking agent per 100 parts by mass of the acrylic rubber of the present invention is 0.05 parts by mass to 20 parts by mass, preferably 0.1 parts by mass to 10 parts by mass, more preferably 0.2 parts by mass to 3 parts by mass.

Moreover, the acrylic rubber-containing composition of the present invention may contain any other additives usually used in the technical field, including lubricants, antioxidants, photostabilizers, fillers, reinforcing agents, plasticizers, softeners, processing aids, pigments, colorants, crosslinking accelerators, crosslinking aids, crosslinking retardants, antistatic agents, and foaming agents. These may be used alone or in combinations of two or more.

Examples of fillers include known fillers. Specific examples include calcium carbonate, talc, silica, clay, carbon fibers, glass fibers, carbon black, titanium oxide, magnesium oxide, hydrotalcite, magnesium hydroxide, antimony oxide, zinc oxide, and carbon black. These may be used alone or in combinations of two or more. Preferred among these is silica or carbon black.

The amount of fillers per 100 parts by mass of the acrylic rubber of the present invention may be 15 to 100 parts by mass and is preferably 20 to 80 parts by mass.

Examples of softeners include lubricating oils, process oils, coal tar, castor oil, stearic acid, and calcium stearate. These may be used alone or in combinations of two or more.

The amount of softeners per 100 parts by mass of the acrylic rubber of the present invention may be 0.3 to 10 parts by mass and is preferably 0.5 to 5 parts by mass.

Examples of antioxidants include amines, phosphates, quinolines, cresols, phenols, and dithiocarbamate metal salts. These may be used alone or in combinations of two or more. Preferred among these are amines such as diphenylamine derivatives and phenylenediamine derivatives.

The amount of antioxidants per 100 parts by mass of the acrylic rubber of the present invention may be 0.3 to 10 parts by mass and is preferably 0.5 to 5 parts by mass.

Furthermore, rubbers, resins, and the like usually used in the technical field may be blended without departing from the gist of the present invention. Examples of usual rubbers that may be used in the present invention include polybutadiene rubbers, styrene-butadiene rubbers, polyisoprene rubbers, natural rubbers, acrylonitrile-butadiene rubbers, acrylonitrile-butadiene-isoprene rubbers, ethylene-propylene-diene rubbers, and epichlorohydrin rubbers, and examples of usable resins include polymethyl methacrylate (PMMA) resins, polystyrene (PS) resins, polyurethane (PUR) resins, polyvinyl chloride (PVC) resins, ethylene/vinyl acetate (EVA) resins, styrene/acrylonitrile (AS) resins, and polyethylene (PE) resins. These may be used alone or in combinations of two or more.

The combined amount of these rubbers and resins per 100 parts by mass of the acrylic rubber of the present invention is 50 parts by mass or less, preferably 10 parts by mass or less, more preferably 1 part by mass or less.

To obtain the crosslinked rubber product of the present invention, the acrylic rubber-containing composition may be compounded using any means conventionally used in the field of rubber processing, such as an open roll mill, a Banbury mixer, or any of various kneaders. The compounding may be performed by usual procedures employed in the field of rubber processing. For example, the following procedure may be used: only a rubber is first kneaded, then compounding ingredients other than a crosslinking agent and a crosslinking accelerator are introduced to prepare an A-kneaded compound, and thereafter B-kneading is performed by introducing the crosslinking agent and the crosslinking accelerator.

The acrylic rubber-containing composition used to obtain the crosslinked rubber product of the present invention preferably shows a value of 90 cm/min or more, more preferably 93 cm/min or more, particularly preferably 95 cm/min or more when it is extruded in accordance with the Garvey die extrusion test of ASTM-D-2230:2022 at an L/D ratio of 10, a rotation speed of 90 rpm, a cylinder temperature of 60°C, and a die temperature of 80°C.

### <Crosslinked rubber product>

The crosslinked rubber product of the present invention can be produced by crosslinking the acrylic rubber-containing composition.

The crosslinked rubber product of the present invention can be produced by heating the acrylic rubber-containing composition to usually 100°C to 250°C. Although the crosslinking time depends on the temperature, it is usually 0.5 to 300 minutes. As for crosslinking and forming, crosslinking and forming may be performed in an integrated manner, or a previously formed product of the acrylic rubber-containing composition may be reheated to produce a crosslinked rubber product. Alternatively, a crosslinked rubber product obtained by previously heating the composition may be processed for forming. Specifically, the crosslinking and forming may be performed by compression or injection molding using a mold, heating using a steam can, an air bath, infrared rays, or microwaves, or any other method.

The acrylic rubber-containing composition of the present invention obtained as described above has excellent roll processability during processing, and the crosslinked rubber product of the present invention has excellent normal-state physical properties and excellent heat resistance under long-term high temperature conditions.

Thus, taking advantage of the above-described characteristics, the crosslinked rubber product of the present invention can be suitably used in O-rings, packings, diaphragms, oil seals, shaft seals, bearing seals, mechanical seals, well-head seals, seals for electrical and electronic equipment, seals for pneumatic equipment, and various types of gaskets such as cylinder head gaskets which are mounted at the joint between a cylinder block and a cylinder head, rocker cover gaskets which are mounted at the joint between a rocker cover and a cylinder head, oil pan gaskets which are mounted at the joint between an oil pan and a cylinder block or transmission case, gaskets for fuel cell separators which are mounted between a pair of housings sandwiching a unit cell provided with a cathode, an electrolyte plate, and an anode, and gaskets for top covers of hard disk drives.

Moreover, the crosslinked rubber product of the present invention can be suitably used as extruded products or molded crosslinked products in automotive applications, for example, various hoses, including fuel oil hoses around fuel tanks such as fuel hoses, filler neck hoses, vent hoses, vapor hoses, and oil hoses; air hoses such as turbo air hoses and emission control hoses; radiator hoses, heater hoses, brake hoses, and air conditioner hoses.

### EXAMPLES

The present invention will be specifically described with reference to, but not limited to, examples and comparative examples.

### <Mooney viscosity (ML1+4, 100°C) and area value determined from Mooney stress relaxation test>

The Mooney viscosity (ML1+4) of the acrylic rubber was measured at 100°C using SMV-301RT available from Shimadzu Corporation in accordance with the Mooney viscosity test of the uncrosslinked rubber physical test method of JIS K 6300-1:2013. The area value determined by a Mooney stress relaxation test (represented in the table by Mooney stress relaxation area value) was obtained from a stress relaxation curve with a relaxation time of 1 second to 120 seconds obtained by a stress relaxation test in accordance with ASTM D1646:2019.

### <Insoluble content>

About 0.2 g of the acrylic rubber was accurately weighed out and placed in a basket made of a 150 mesh screen. Then, the acrylic rubber was immersed in 100 mL of methyl ethyl ketone and left at room temperature for 24 hours. Thereafter, the basket was taken out and dried. The solids remaining in the basket after the drying was weighed. The insoluble content was calculated using the following equation: Insoluble content (% by mass) = 100 × (1 - (Amount of acrylic rubber sample - Amount of solids after drying/Amount of acrylic rubber sample)).

### (Production of acrylic rubber 1)

A polymerization reactor equipped with a thermometer, a stirring device, a nitrogen inlet pipe, and a pressure reducing device was charged with 150 parts by mass of water and 1.2 parts by mass of a sodium salt of polyoxyalkylene alkyl ether phosphate. Oxygen was sufficiently removed by repeating degassing under reduced pressure and nitrogen replacement. Then, 0.072 parts by mass of sodium formaldehyde sulfoxylate and 0.06 parts by mass of potassium persulfate were added, and then a mixture containing 68.5 parts by mass of ethyl acrylate, 20 parts by mass of butyl acrylate, 10 parts by mass of 2-methoxyethyl acrylate, and 1.5 parts by mass of n-monobutyl fumarate as monomers and 0.05 parts by mass of n-dodecyl mercaptan as a chain transfer agent was continuously added dropwise at normal pressure and normal temperature over 300 minutes to perform an emulsion polymerization reaction. After 200 minutes from the start of the dropwise addition, 0.05 parts by weight of hexamethylene diacrylate was added, and the reaction was continued until the polymerization conversion rate reached 95% or more, whereby a polymerization liquid was obtained. The polymerization liquid was coagulated with sodium sulfate, and the coagulum was washed with water and dried to obtain acrylic rubber 1. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 1.

### (Production of acrylic rubber 2)

Acrylic rubber 2 was obtained as in the production of acrylic rubber 1, except that the amount of hexamethylene diacrylate was changed to 0.08 parts by mass. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 2.

### (Production of acrylic rubber 3)

Acrylic rubber 3 was obtained as in the production of acrylic rubber 1, except that the amount of n-dodecyl mercaptan was changed to 0.04 parts by mass. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 3.

### (Production of acrylic rubber 4)

A polymerization reactor equipped with a thermometer, a stirring device, a nitrogen inlet pipe, and a pressure reducing device was charged with 150 parts by mass of water and 1.2 parts by mass of a sodium salt of polyoxyalkylene alkyl ether phosphate. Oxygen was sufficiently removed by repeating degassing under reduced pressure and nitrogen replacement. Then, 0.072 parts by mass of sodium formaldehyde sulfoxylate and 0.06 parts by mass of potassium persulfate were added, and then a mixture containing 68.5 parts by mass of ethyl acrylate, 20 parts by mass of butyl acrylate, 10 parts by mass of 2-methoxyethyl acrylate, and 1.5 parts by mass of monobutyl fumarate as monomers, 0.07 parts by mass of n-dodecyl mercaptan as a chain transfer agent, and 0.05 parts by mass of hexamethylene diacrylate was continuously added dropwise at normal pressure and normal temperature over 300 minutes to perform an emulsion polymerization reaction. The reaction was continued until the polymerization conversion rate reached 95% or more, whereby a polymerization liquid was obtained. The polymerization liquid was coagulated with sodium sulfate, and the coagulum was washed with water and dried to obtain acrylic rubber 4. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 4.

### (Production of acrylic rubber 5)

Acrylic rubber 5 was obtained as in the production of acrylic rubber 4, except that the amount of n-dodecyl mercaptan was changed to 0.01 parts by mass. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 5.

### (Production of acrylic rubber 6)

Acrylic rubber 6 was obtained as in the production of acrylic rubber 4, except that the amount of hexamethylene diacrylate was changed to 0.08 parts by mass and the amount of n-dodecyl mercaptan was changed to 0.05 parts by mass. Table 1 shows the Mooney viscosity (ML1+4, 100°C), the area value determined by a Mooney stress relaxation test, the ratio of the area value determined by a Mooney stress relaxation test to the Mooney viscosity (ML1+4, 100°C), and the insoluble content of acrylic rubber 6.

**[Table 1]**

| | Example 1 | Example 2 | Example 3 | Comparative Example 1 | Comparative Example 2 | Comparative Example 3 |
|---|---|---|---|---|---|---|
| Acrylic rubber | Acrylic rubber 1 | Acrylic rubber 2 | Acrylic rubber 3 | Acrylic rubber 4 | Acrylic rubber 5 | Acrylic rubber 6 |
| Insoluble content (% by mass) | 1 | 38 | 31 | 20 | 72 | 51 |
| Mooney viscosity (ML1+4, 100°C) | 36 | 43 | 40 | 35 | 60 | 34 |
| Mooney stress relaxation area value | 830 | 1049 | 1137 | 658 | 1958 | 610 |
| Mooney stress relaxation area value! Mooney viscosity | 23 | 24 | 29 | 19 | 33 | 18 |

### (Production of acrylic rubber composition)

The acrylic rubber, carbon black (SEAST SO, Tokai Carbon Co., Ltd.), stearic acid (stearic acid SAKURA, NOF Corporation), and antioxidant (NOCRAC CD, Ouchi Shinko Chemical Industrial Co., Ltd.) shown in Table 2 were kneaded using a kneader at 100°C to prepare an A-kneaded compound. The A-kneaded compound was kneaded using an open roll mill at room temperature, and then hexamethylenediamine carbamate and an accelerator (RHENOGRAN XLA-60, Lanxess) were added and kneaded to prepare a B-kneaded compound. Then, an uncrosslinked sheet with a thickness of 2 to 2.5 mm was prepared. In Table 2, the unit of each compounding ingredient is parts by mass.

**[Table 2]**

| | Example 1 | Example 2 | Example 3 | Comparative Example 1 | Comparative Example 2 | Comparative Example 3 |
|---|---|---|---|---|---|---|
| Acrylic rubber 1 | 100 | | | | | |
| Acrylic rubber 2 | | 100 | | | | |
| Acrylic rubber 3 | | | 100 | | | |
| Acrylic rubber 4 | | | | 100 | | |
| Acrylic rubber 5 | | | | | 100 | |
| Acrylic rubber 6 | | | | | | 100 |
| Carbon black | 60 | 60 | 60 | 60 | 60 | 60 |
| Stearic acid | 2 | 2 | 2 | 2 | 2 | 2 |
| Antioxidant | 2 | 2 | 2 | 2 | 2 | 2 |
| Hexamethylenediamine carbamate | 0.6 | 0.6 | 0.6 | 0.6 | 0.6 | 0.6 |
| Accelerator | 2 | 2 | 2 | 2 | 2 | 2 |

### (Evaluation of extrusion properties)

The uncrosslinked sheet was extruded in accordance with the Garvey die extrusion test of ASTM-D-2230:2022 at a L/D ratio of 10, a rotation speed of 90 rpm, a cylinder temperature of 60°C, and a die temperature of 80°C. The surface condition of the extrudate was evaluated on a scale of 1 to 4 according to the A method of ASTM-D-2230. A higher such evaluation score indicates a better surface condition (extrudate texture) of the extrudate. A longer length of the extrudate per unit time indicates better extrusion properties.

### (Preparation of secondary crosslinked product)

The uncrosslinked rubber sheet was pressed at 180°C for 10 minutes to obtain a 2 mm-thick primary crosslinked product. The primary crosslinked product was further heated in an air oven at 180°C for three hours to obtain a secondary crosslinked product.

### (Test for Normal-state physical properties)

The secondary crosslinked product was evaluated by a tensile test and a hardness test. The tensile test was performed in accordance with JIS K 6251:2017, and the hardness test was performed in accordance with JIS K 6253:2012.

Table 3 shows the test results of the examples and comparative examples obtained by the test methods.

In each table, tensile strength (Tb) and elongation (Eb) refer to the tensile strength and elongation, respectively, defined in the tensile test of JIS K 6251:2017, and hardness (Hs) refers to the hardness defined in the hardness test of JIS K 6253:2012. Table 3 shows the results. An acrylic rubber having a tensile strength of 8 MPa or higher, an elongation of 200% or more, and a hardness of 60 or more was considered as maintaining the normal-state physical properties expected of acrylic rubbers. In Table 3, the unit of tensile strength (Tb) is MPa, and the unit of elongation (Eb) is %.

**[Table 3]**

| | Example 1 | Example 2 | Example 3 | Comparative Example 1 | Comparative Example 2 | Comparative Example 3 |
|---|---|---|---|---|---|---|
| Extrusion properties: ASTM D2230 | | | | | | |
| Extrudate texture (1 (poor) to 4 (good)) | 4 | 4 | 4 | 4 | 2 | 4 |
| Extrudate length (cm/min) | 95 | 91 | 92 | 84 | 88 | 59 |

| Normal-state physical properties | | | | | | |
|---|---|---|---|---|---|---|
| Tb | 11.2 | 11.6 | 11.8 | 11.4 | 13.0 | 11.5 |
| Eb | 240 | 250 | 270 | 220 | 230 | 250 |
| Hs | 63 | 66 | 64 | 67 | 64 | 63 |

Table 3 shows that as the acrylic rubber-containing compositions of Examples 1 to 3 each contain an acrylic rubber which has a ratio of the area value determined from a stress relaxation curve with a relaxation time of 1 second to 120 seconds obtained by a stress relaxation test in accordance with ASTM D1646:2019 to the Mooney viscosity (ML1+4) measured at 100°C in accordance with the Mooney viscosity test of the uncrosslinked rubber physical test method of JIS K 6300-1:2013 that is 20 to 32 and contains a structural unit derived from a polyfunctional monomer having two or more double bonds, they have good extrusion properties and a good extrudate texture, and their crosslinked products are also able to maintain the normal-state physical properties expected of acrylic rubbers.

### INDUSTRIAL APPLICABILITY

The present invention can provide an acrylic rubber with good extrusion properties and a good extrudate texture. A crosslinked rubber product produced from a composition containing the acrylic rubber is suitable for a variety of automotive components, such as seal materials, hose materials, anti-vibration materials, tube materials, belt materials, and boot materials.

## Claims

1. An acrylic rubber, comprising a structural unit derived from a polyfunctional monomer having two or more double bonds, the acrylic rubber satisfying the following requirement (i):
(i) a ratio of an area value determined from a stress relaxation curve with a relaxation time of 1 second to 120 seconds obtained by a stress relaxation test in accordance with ASTM D1646:2019 to a Mooney viscosity (ML1+4) measured at 100°C in accordance with a Mooney viscosity test of an uncrosslinked rubber physical test method of JIS K 6300-1:2013 is 20 to 32.

2. The acrylic rubber according to claim 1, further satisfying the following requirement (ii):
(ii) the acrylic rubber has an insoluble content of 60% by mass or lower as measured using a 150 mesh screen after it is immersed in methyl ethyl ketone and left at room temperature for 24 hours.

3. The acrylic rubber according to claim 1 or 2,
wherein the Mooney viscosity (ML1+4) measured at 100°C in accordance with the Mooney viscosity test of the uncrosslinked rubber physical test method of JIS K 6300-1:2013 is 25 to 60.

4. The acrylic rubber according to claim 1 or 2, further comprising a structural unit derived from a crosslinking group monomer.

5. An acrylic rubber-containing composition, comprising the acrylic rubber according to claim 1 or 2, and a crosslinking agent.

6. A crosslinked rubber product, produced from the acrylic rubber-containing composition according to claim 5.
